# EUROPÄISCHE PATENTSCHRIFT

(11) **EP 1 555 472 B1**
(45) Veröffentlichungstag und Bekanntmachung des Hinweises auf die Patenterteilung: **19.12.2007**
(21) Anmeldenummer: 04029305.2
(22) Anmeldetag: 10.12.2004
(51) Int. Cl.: F16K 37/00

(54) **Verfahren und Vorrichtung zur Funktionsüberwachung bei Ventilen**
Process and apparatus for monitoring the functioning of valves
Procédé et appareil pour la surveillance du fonctionnement de soupapes

(30) Priorität: 14.01.2004 DE 102004001915
(43) Veröffentlichungstag der Anmeldung: 20.07.2005
(73) Patentinhaber: Festo AG & Co., 73734 Esslingen (DE)
(72) Erfinder: Schleicher, Christian, 73326 Deggingen (DE); Wunderlich, Werner, 73734 Esslingen (DE)
(74) Vertreter: Abel, Martin

(56) Entgegenhaltungen:
- EP-A- 0 287 299
- EP-A- 0 962 685
- WO-A-02/063192
- DE-A1- 4 439 230
- US-A- 4 896 101
- US-A- 5 202 673

## Beschreibung

Die Erfindung betrifft ein Verfahren und eine Vorrichtung zur Funktionsüberwachung bei der Fluidsteuerung dienenden Ventilen, die wenigstens ein elektrisches Betätigungsglied zur Ventilbetätigung aufweisen, das mit einer Betriebszustandsanzeige zur Anzeige des aktuellen Betriebszustands des Betätigungsglieds gekoppelt ist.

Wie die meisten Bauteile in technischen Anlagen müssen auch Ventile von Zeit zu Zeit gewartet, überprüft oder repariert werden. Eine Möglichkeit den Funktionszustand des zu untersuchenden Ventils zu bestimmen, ist, zu messen ob das Ventil schaltet und falls ja, ob die Schaltzeit in einem vorgegebenen Rahmen bleibt. Diese sogenannten "Schaltzeitmessungen" sind relativ aufwendig, da das "Innenleben" der Ventile nicht ohne weiteres zugänglich ist und somit ein spezielles Mess-Equipment eingesetzt werden muss, dessen Bedienung jedoch ein geschultes Fachpersonal voraussetzt.

Eine Möglichkeit an Apparaturen bzw. Anlagen während des Betriebs, "in-situ", zu messen, ist in der US 2003/0070486 A1 beschrieben. Dabei wird ein optisches Drucküberwachungssystem eingesetzt, bei dem optische Sensoren an einem lichtdurchlässigen Infusionsschlauch angebracht sind, wobei durch Änderung des durch den Schlauch transmittierten Lichts Konzentrationsänderungen in der durch den Infusionsschlauch transportierten Nährlösung festgestellt werden können.

In der EP 0 962 685 A1 ist eine Ventilanordnung offenbart, die eine fluiddurchströmbare Öffnung besitzt, in der ein drehbar gelagertes Schließmittel angeordnet ist, das seinerseits einen Durchgangskanal besitzt. Je nach Drehposition des Schließmittels ist der Durchgangskanal entweder parallel zur Strömungsrichtung ausgerichtet, wodurch Fluid durch die Öffnung gelangen kann und das Ventil offen ist oder im wesentlichen rechtswinkelig zur Strömungsrichtung ausgerichtet, wodurch die Öffnung abgesperrt und das Ventil geschlossen ist. Um festzustellen, ob das Ventil offen oder geschlossen ist, ist eine Sensoreinrichtung vorgesehen, die eine auf der einen Seite der Öffnung angeordnete Lichtquelle in Form einer LED und einen auf der anderen Seite der Öffnung angeordneten Detektor besitzt. Gelangt nunmehr Licht von der Lichtquelle über den Durchgangskanal zum Detektor und wird dort detektiert, bedeutet dies, dass das Ventil offen ist, während, falls kein Licht ankommt, das Ventil geschlossen ist.

Die EP 0 844 425 A1 beschreibt eine Vorrichtung zur Positionsbestimmung eines Ventilkolbens. Am Ende des Kolbens befinden sich Abschnitte unterschiedlichen Durchmessers, die mit einer Infrarotlicht aussendenden Detektoreinrichtung korrespondieren, wobei, je nachdem ob sich ein Durchmesser kleinerer oder Durchmesser größerer Abschnitt im Strahlgang des Infrarotlichtes befindet, mehr oder weniger Licht reflektiert wird, worüber festgestellt werden kann, welcher Abschnitt mit Infrarotlicht bestrahlt wird und darüber die Position des Ventilkolbens ermittelt werden kann.

Aufgabe der Erfindung ist es ein Verfahren und eine Vorrichtung zur Funktionsüberwachung bei Ventilen gemäß der eingangs erwähnten Art zu schaffen, die gegenüber herkömmlichen Methoden und Vorrichtungen einfacher und schneller handhabbar und somit kostengünstiger sind.

Diese Aufgabe wird durch ein Verfahren gemäß den Merkmalen des unabhängigen Anspruchs 1 und eine Vorrichtung gemäß den Merkmalen des unabhängigen Anspruchs 12 gelöst. Weiterbildungen der Erfindung sind in den Unteransprüchen dargestellt.

Das erfindungsgemäße Verfahren zeichnet sich dadurch aus, dass eine Änderung des angezeigten Betriebszustands des Betätigungsglieds mittels eines optischen Sensors optisch erfasst und die Betriebszustandsänderung als Startzeitpunkt t₀ festgelegt wird. Am Ventilausgang bzw. Arbeitsanschluss wird eine Druckänderung als Folge der Betriebszustandsänderung mittels einer Erfassungseinrichtung ab dem Startzeitpunkt t₀ gemessen und ein der Druckänderung zugeordnetes Signal erzeugt. Der Schaltzustand des Ventils wird verifiziert, wobei geprüft wird, ob nach einer bestimmten Zeit ab dem Startzeitpunkt t₀ ein bestimmtes druckabhängiges Signal vorhanden ist.

Die Schaltfunktion des zu untersuchenden Ventils kann überprüft werden, ohne in das "Innenleben" des Ventils selber eingreifen zu müssen, so dass derartige Messungen in einfacher Weise bei einem Serviceeinsatz oder auch im ständigen Betrieb als laufende Diagnose durchgeführt werden können.

Der Schaltzustand des Ventils kann qualitativ oder quantitativ bestimmt werden, wobei bei einer qualitativen Bestimmung ein Vorliegen eines bestimmten druckabhängigen Signals einem Schalten bzw. einem Schaltvorgang des Ventils und ein Nicht-Vorliegen eines bestimmten druckabhängigen Signals einer Fehlfunktion zugeordnet werden kann. Qualitativ kann also geprüft werden, ob ein bestimmtes druckabhängiges Signal vorliegt oder nicht. Liegt kein bestimmtes druckabhängiges, insbesondere gar kein Signal vor, kann dies mehrere Ursachen haben, beispielsweise kann es daran liegen, dass das Ventil nicht schaltet. Es ist jedoch auch möglich, dass der betreffende Ventilkanal verstopft ist oder dass Druckmedium bzw. Fluid gar nicht in den betreffenden Ventilkanal gelangt, sondern in andere Kanäle strömt oder möglicherweise aus dem Ventil entweicht. Jedenfalls ist das Nicht-Vorliegen eines bestimmten druckabhängigen Signals ein Anzeichen dafür, dass das zu untersuchende Ventil genauer überprüft und gegebenenfalls ausgetauscht werden muss.

Bei einer quantitativen Ermittlung des Ventil-Schaltzustands kann aus der Zeit zwischen dem Startzeitpunkt t₀ und dem Vorliegen eines bestimmten druckabhängigen Signals eine Ist-Schaltzeit des Ventils ermittelt werden, die mit einer vorgegebenen Soll-Schaltzeit verglichen wird. Vorzugsweise wird eine Ist-Schaltzeit, die kleiner oder gleich der Soll-Schaltzeit ist, einem korrekten Schaltvorgang des Ventils zugeordnet. In bevorzugter Weise schließt sich an die qualitative Bestimmung des Schaltzustandes des Ventils die quantitative an und zwar in der Art, das bei Vorliegen eines bestimmten druckabhängigen Signals in einem nächsten Schritt geprüft wird, ob dieses Signal innerhalb des vorgegebenen Zeitfensters, also innerhalb der vorgegebenen Soll-Schaltzeit, liegt.

Es ist möglich die Ist-Schaltzeit mehrmals hintereinander zu bestimmen, um zu überprüfen, ob sich diese verändert, beispielsweise erhöht oder erniedrigt. Eine Veränderung, insbesondere Erhöhung der Ist-Schaltzeit kann auf Verschleiß des Ventils hindeuten, beispielsweise könnte bei Ventilen mit Ventilschiebern Reibverschleiß zwischen Ventilschieber und dem ihm umgebenden Gehäuse vorhanden sein.

Besonders bevorzugt wird vor der eigentlichen Messung zunächst bei konstantem Betriebszustand des Betätigungsglieds ein druckabhängiges Referenzsignal, beispielsweise ein Grundrauschen ermittelt. Dadurch kann beurteilt werden, dass ein ankommendes bestimmtes druckabhängiges Signal nicht zum Grundrauschen gehört, sondern bereits ein Messsignal darstellt.

Bei der Betriebszustandsanzeige kann es sich um eine Leuchtanzeige handeln, die vorzugsweise mittels Aufleuchten einen Funktionszustand und im dunklen Zustand einen Ruhezustand des Betätigungsglieds anzeigt. Selbstverständlich kann auch der Funktionszustand per ausgeschalteter Leuchtanzeige und der Ruhezustand per eingeschalteter Leuchtanzeige angezeigt werden. Ausschlaggebend ist, dass eine Betriebszustandsänderung durch den optischen Sensor erfasst werden kann. So ist es prinzipiell auch möglich den Funktionszustand durch ein helleres Leuchten und den Ruhezustand durch ein schwächeres Leuchten der Leuchtanzeige darzustellen oder umgekehrt.

Eine andere Möglichkeit ist, den Betriebszustand des Betätigungsglieds mittels Symbolen anzuzeigen, vorzugsweise durch Schrift, beispielsweise durch Anzeigen von "on" für den Funktionszustand und "off" für den Ruhezustand. Auch hier könnte ein Wechsel zwischen "off" und "on" mittels des optischen Sensors detektiert werden.

Zweckmäßigerweise handelt es sich bei der Leuchtanzeige um wenigstens ein Leuchtmittel, beispielsweise um wenigsten eine LED. Alternativ oder zusätzlich ist auch ein Leuchtmittel in Form einer Glühbirne möglich.

Bei einer Weiterbildung der Erfindung handelt es sich bei dem optischen Sensor um ein optisch empfindliches Halbleiterelement, beispielsweise um eine Fotodiode und/oder einen Fototransistor.

Der optische Sensor kann mit einer Signalverarbeitungseinrichtung gekoppelt sein, die ein infolge der Betriebszustandsänderung des Betätigungsglieds vom optischen Sensor initiiertes Signal verarbeitet und dieses Signal als Startzeitpunkt t₀ festlegt. Ferner kann in der Signalverarbeitungseinrichtung das von der Erfassungseinrichtung übermittelte druckabhängige Signal verarbeitet werden. Als Signalverarbeitungseinrichtung ist vorzugsweise ein Rechner mit einem Mikro-Controller vorgesehen. Der Mikro-Controller kann dabei so ausgelegt sein, dass ein beim Messen erzeugtes bestimmtes druckabhängiges Signal selbstständig vom insbesondere vorher hinterlegten Referenzsignal bzw. vom Grundrauschen unterschieden wird. Zweckmäßigerweise besitzt die Signalverarbeitungseinrichtung eine Analyseeinheit anhand derer die Messergebnisse ausgewertet werden können. Beispielsweise kann ein Display vorgesehen sein, auf dem die druckabhängigen Signale als "Peaks" zu sehen sind.

Besonders bevorzugt kann die Erfassungseinrichtung an der Ventilperipherie des zu untersuchenden Ventil lösbar befestigt werden, insbesondere an einem mit dem Ventilausgang bzw. Arbeitsanschluss verbundenen Druckschlauch. Dadurch ist es möglich eine zu erwartende Druckänderung im Schlauch "in-situ" bzw. während des Ventilbetriebs zu messen. Eine Druckänderung wird vorzugsweise in Form eines Beschleunigungssignal mittels eines der Erfassungseinrichtung zugeordneten Beschleunigungssensors erfasst. Vorzugsweise ist der Beschleunigungssensor Teil der Erfassungseinrichtung, beispielsweise derart, dass eine Schlauchklemme verwendet wird, in die der in der Regel kapazitiv arbeitende Beschleunigungssensor integriert ist.

Prinzipiell ist es auch möglich den Druck mit einem Drucksensor zu messen, beispielsweise derart, dass der Drucksensor in den Arbeitskanal oder Druckschlauch integriert wird. Der Drucksensor kann beispielsweise in ein T-Stück eingebaut werden, das nachträglich an den Arbeitskanal angebaut wird. Alternativ kann sich das T-Stück bereits am Arbeitskanal befinden, wodurch lediglich noch der Drucksensor einzubauen ist.

Es ist möglich, dass bei Vorliegen eines druckabhängigen Signals eine Bestätigung in Form eines optischen und/oder akustischen Signals erfolgt, beispielsweise durch Aufblinken einer Leuchtanzeige und/oder durch Ertönen eines Pieps- oder Pfeiftons.

Die Erfindung umfasst ferner eine Vorrichtung zur Funktionsüberwachung bei der Fluidsteuerung dienenden Ventilen, die sich dadurch auszeichnet, dass ein optischer Sensor zur optischen Erfassung einer Änderung des angezeigten Betriebszustandes des Betätigungsglieds vorgesehen ist, der mit einer Signalverarbeitungseinrichtung zur Verarbeitung des vom optischen Sensor übermittelten Signals und zur Festlegung der Betriebszustandsänderung als Startzeitpunkt t₀ gekoppelt ist. Es ist eine Erfassungseinrichtung zur Messung einer Druckänderung am Ventilausgang als Folge der Betriebszustandsänderung vorgesehen, die ein druckabhängiges Signal, das der Druckänderung zugeordnet ist, an die Signalverarbeitungseinrichtung übermittelt. Die Signalverarbeitungseinrichtung besitzt eine Analyseeinheit, um den Schaltzustand des Ventils zu verifizieren, wobei geprüft wird, ob ein bestimmtes druckabhängiges Signal ab dem Startzeitpunkt t₀ vorliegt.

Bezüglich weiterer Details der erfindungsgemäßen Vorrichtung wird auf die vorstehende Beschreibung und die nachfolgende Beschreibung eines bevorzugten Ausführungsbeispiels verwiesen.

Ein bevorzugtes Ausführungsbeispiel ist in den Zeichnungen dargestellt und wird im folgenden näher erläutert. Die Zeichnungen zeigen:
- Figur 1: eine schematische Übersichtsdarstellung der erfindungsgemäßen Vorrichtung,
- Figur 2: eine Seitenansicht auf eine an einem Druckschlauch befestigte Erfassungsvorrichtung,
- Figur 3: den Spannungs- bzw. Druckverlauf über der Zeit bei einem Messvorgang an einem Ventil und
- Figur 4: ein schematisches Blockschaubild zur Veranschaulichung des erfindungsgemäßen Verfahrens.

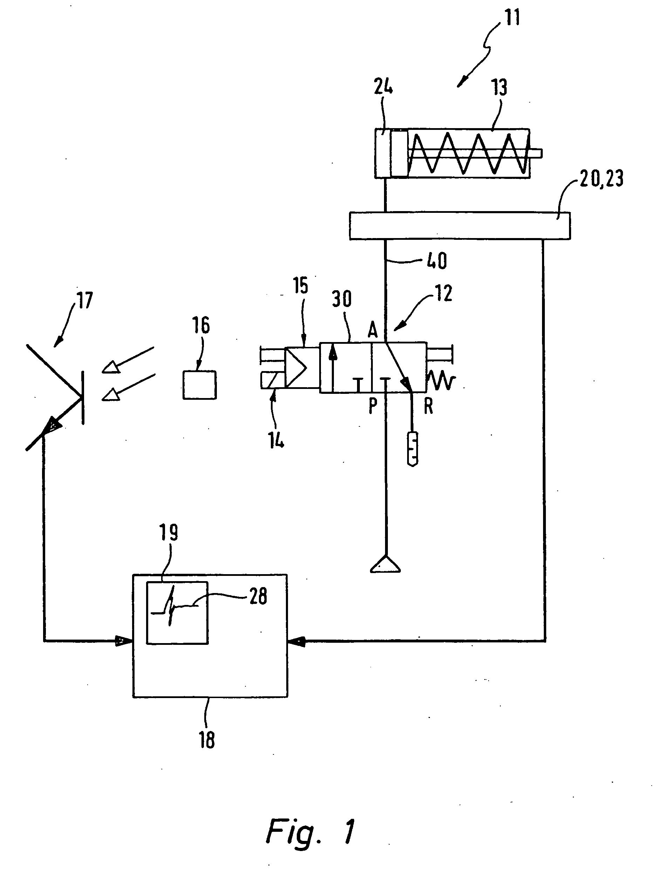

Figur 1 zeigt ein bevorzugtes Ausführungsbeispiel der erfindungsgemäßen Vorrichtung 11 zur Funktionsüberwachung von der Fluidsteuerung dienenden Ventilen 12, von denen beispielhaft ein 3/2-Wegeventil dargestellt ist. Das Ventil 12 ist mit einem zu betätigenden Antriebsglied bzw. Aktor gekoppelt das beispielhaft in Form eines einfach wirkenden Druckluftzylinders 13 mit Rückstellfeder dargestellt ist. Selbstverständlich können verschiedenste Arten von Aktoren mittels des Ventils 12 betätigt werden.

Das Ventil 12 besitzt ein elektrisches Betätigungsglied 14 zur Ventilbetätigung, das beispielhaft in Form eines Elektromagneten dargestellt ist. Prinzipiell sind auch andere Arten von elektrischen Betätigungsgliedern einsetzbar, beispielsweise Piezoelemente o. dgl. Der Elektromagnet dient gemäß bevorzugtem Ausführungsbeispiel zur Betätigung eines Vorsteuerventils 15, das seinerseits zur pneumatischen Betätigung des eigentlichen Hauptventils 30 eingesetzt wird, beispielsweise derart, dass ein Antriebskolben des Hauptventils 30 mittels Druckbeaufschlagung in verschiedene Schaltstellungen gebracht werden kann, so dass dadurch verschiedene Ventilkanäle miteinander verbunden oder voneinander getrennt werden können. Auf den Aufbau des Vorsteuer- und des Hauptventils 15, 30 soll im folgenden nicht näher eingegangen werden.

Das elektrische Betätigungsglied 14 ist mit einer Betriebszustandsanzeige 16 gekoppelt, die beispielhaft anhand einer LED dargestellt ist. Die Betriebszustandsanzeige 16 dient zur Anzeige des aktuellen Betriebszustandes des elektrischen Betätigungsglieds 14, beispielsweise in der Form, das bei einer Erregung der im Elektromagneten befindlichen Magnetspule die LED aufleuchtet und somit einen Funktionszustand anzeigt, während die LED im unerregten Zustand der Magnetspule dunkel bleibt.

Die Vorrichtung 11 zur Funktionsüberwachung des Ventils 12 umfasst einen optischen Sensor 17, der beispielhaft anhand einer Fotodiode dargestellt ist. Die Fotodiode ist der Betriebszustandsanzeige 16 zugewandt und dient zur optischen Erfassung einer Betriebszustandsänderung des elektrischen Betätigungsglieds 14. Der optische Sensor 17 ist mit einer Signalverarbeitungseinrichtung 18 gekoppelt, die in nachfolgend näher zu schildernden Weise zur Signalverarbeitung der vom optischen Sensor 17 übermittelten Signale dient. Die Signalverarbeitungseinrichtung 18 besitzt eine Analyseeinheit 19 beispielsweise ein Display, auf der verschiedene Signale in Form von "Peaks" angezeigt werden können.

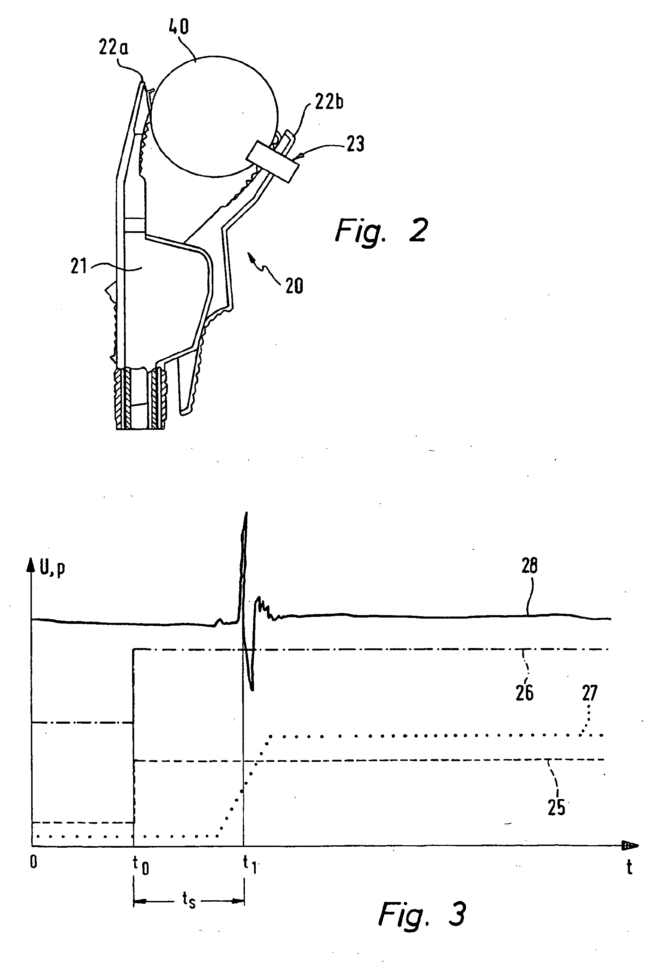

Es ist ferner eine Erfassungseinrichtung 20 vorgesehen, die an einem den Ventilausgang und den Aktor verbindenden Druckschlauch 40 angebracht ist. Wie in Figur 3 dargestellt, umfasst die Erfassungsvorrichtung 20 eine Befestigungsklemme 21, die am Druckschlauch 40 befestigt werden kann. Die Befestigungsklemme 21 besitzt ihrerseits zwei Klemmschenkel 22a, 22b, die auf den Druckschlauch 40 geklemmt werden können, wobei sich an einem Klemmschenkel 22b ein Beschleunigungssensor 23 befindet, der eine Druckänderung im Schlauch, die mit einer Durchmesseränderung des Schlauchs einhergeht, misst und in Form eines Beschleunigungssignals an die Signalverarbeitungseinrichtung 18 übermittelt.

Im Folgenden wird das erfindungsgemäße Verfahren beispielhaft anhand einer Funktionsüberwachung eines 3/2-Wegeventils beschrieben, das zur Fluidsteuerung eines einfach wirkenden Druckluftzylinder 13 dient.

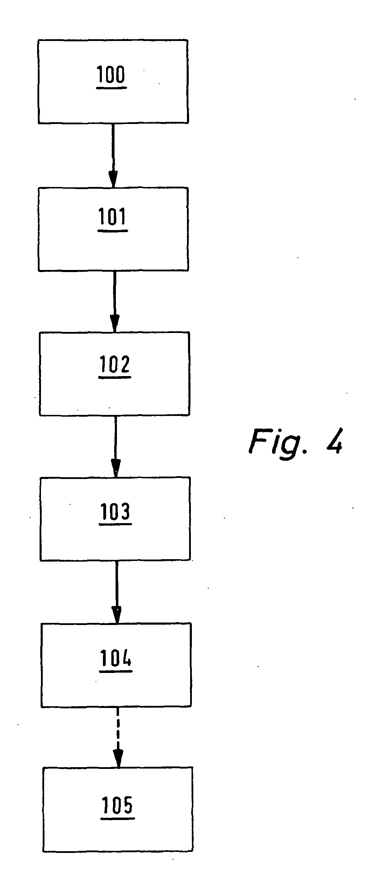

Wie in Figur 1 dargestellt und in Figur 4 durch den Schritt 100 repräsentiert, ist die mit Druckluft beaufschlagbare Kolbenkammer 24 des Druckluftzylinders 13 durch Zusammenschaltung des Arbeitsanschlusses "A" mit dem Entlüftungsanschluss "R" entlüftet. Die Magnetspule des Elektromagneten ist im unerregten Zustand. Die LED ist dunkel. Die Erfassungseinrichtung 20, insbesondere deren Befestigungsklemme 21 ist am Druckschlauch 40 befestigt. Der optische Sensor 17 ist beispielsweise mit einem Clip oder Knetmasse im Bereich der LED festgelegt. Gemäß Schritt 101 wird nun eine Betriebszustandsänderung der Magnetspule herbeigeführt, beispielsweise wird die Magnetspule des Elektromagneten mit Strom beaufschlagt. Der Spannungsverlauf der Magnetspulenspannung 25 über der Zeit ist in Figur 3 beispielhaft anhand der gestrichelten Linie dargestellt. Beim Erregen der Magnetspule kommt es zu einem Spannungssprung, das heißt die Spannung wird schlagartig größer. Der Elektromagnet ist mit der LED gekoppelt, so dass diese bei Erregung der Magnetspule aufleuchtet. Der Spannungsverlauf der LED-Spannung 26 über der Zeit ist in Figur 3 beispielhaft durch die strichpunktierte Linie dargestellt. Der Spannungssprung an der LED erfolgt im Wesentlichen verzögerungsfrei gegenüber dem Spannungssprung an der Magnetspule.

Das Aufleuchten der LED, das die Betriebszustandsänderung des Elektromagneten signalisiert, wird über den optischen Sensor 16 detektiert und in ein Signal umgewandelt, das gemäß Schritt 102 an die Signalverarbeitungseinrichtung 18 übermittelt wird. In der Signalverarbeitungseinrichtung 18 wird dieses Signal als Startzeitpunkt t₀ festgelegt.

Durch die Erregung der Magnetspule wird es im Normalfall zu einem Schaltvorgang des Ventils 12 kommen, wodurch der Speisenanschluss "P" mit dem Arbeitsanschluss "A" verbunden wird, so dass Druckluft in die Kolbenkammer 24 des Druckluftzylinders strömen kann. Ist dies der Fall, müsste am Ventilausgang eine Druckänderung, insbesondere eine Druckerhöhung feststellbar sein. Der Druckverlauf am Ventilausgang 27 über der Zeit ist in Figur 3 mittels der gepunkteten Linie dargestellt. Da die Kolbenkammer 24 im vorausgegangenen Schaltzustand entlüftet war, braucht es im Regelfall eine gewisse Zeit, bis ein Druckanstieg detektiert werden kann, da sich die Kolbenkammer erst noch mit Druckluft füllen muss. Dies ist beispielhaft daran zu erkennen, dass ein detektiertes druckabhängiges Signal 28, das beispielhaft mittels der durchgezogenen Linie in Figur 3 dargestellt ist, erst mit Verzögerung dem Spannungssprung an der Magnetspule bzw. an der LED folgt.

Schaltet das Ventil 12 also korrekt in seinen zweiten Schaltzustand, so kommt es am Ventilausgang zu einer Druckänderung, die gemäß Schritt 103 mittels der Erfassungseinrichtung 20, insbesondere mit dem Beschleunigungssensor 23 gemessen wird.

Der Beschleunigungssensor 23 misst eine durch die Druckänderung verursachte Durchmesseränderung des Druckschlauchs 40 über ein bestimmtes Zeitfenster. Im konkreten Fall wird sich der Schlauch also in Folge der Druckerhöhung aufweiten. Es wird ein Beschleunigungssignal erzeugt, das an die Signalverarbeitungseinrichtung 18 übermittelt wird, wo es beispielsweise an der Analyseeinheit 19 in Form eines "Peaks" abgelesen werden kann. Gemäß Schritt 104 wird nun der Schaltzustand des Ventils 12 verifiziert. Ist kein solcher "Peak" vorhanden, ist dies ein Anzeichen dafür, dass eine Fehlfunktion des Ventils 12 vorliegt, beispielsweise dass das Ventil 12 trotz Erregung der Magnetspule nicht korrekt schaltet. Kommt ein "Peak" an, der sich vom Grundrauschen unterscheidet, so ist das ein Zeichen dafür, dass das Ventil 12 geschaltet hat.

Gemäß Schritt 105 kann noch zusätzlich aus der Zeit zwischen dem Startzeitpunkt t₀ und dem Auftauchen des "Peaks" die Schaltzeit tₛ für das Ventil 12 bestimmt werden, wobei die Schaltzeit tₛ die Differenz tₛ=t₁-t₀ ist. Weicht diese Ist-Schaltzeit von einer vorgegebenen, insbesondere in der Signalverarbeitungseinrichtung 18 gespeicherten Soll-Schaltzeit ab, so muss das Ventil 12 gewartet werden. Durch mehrmalige Bestimmung der Ist-Schaltzeit hintereinander, lässt sich feststellen, ob sich diese mit der Zeit verändert, insbesondere erhöht, was für einen Verschleiß des Ventils 12 spricht.

## Patentansprüche

1. Verfahren zur Funktionsüberwachung bei der Fluidsteuerung dienenden Ventilen (12), die wenigstens ein elektrisches Betätigungsglied (14) zur Ventilbetätigung aufweisen, das mit einer Betriebszustandsanzeige (16) zur Anzeige des aktuellen Betriebszustands des Betätigungsglieds (14) gekoppelt ist, das Verfahren mit folgenden Schritten:
- optische Erfassung einer Änderung des angezeigten Betriebszustands mittels eines optischen Sensors (17),
- Festlegen der Betriebszustandsänderung als Startzeitpunkt t₀,
- Messen einer Druckänderung am Ventilausgang als Folge der Betriebszustandsänderung mittels einer Erfassungseinrichtung (20) ab dem Startzeitpunkt t₀ und Erzeugung eines der Druckänderung zugeordneten druckabhängigen Signals (28), und
- Verifizieren des Schaltzustands des Ventils durch Prüfen, ob nach einer bestimmten Zeit ab dem Startzeitpunkt tₒ ein bestimmtes druckabhängiges Signal (28) vorhanden ist.

2. Verfahren nach Anspruch 1, **dadurch gekennzeichnet, dass** ein Vorliegen eines bestimmten druckabhängigen Signals (28) einem Schaltvorgangs des Ventils (12) und ein Nicht-Vorliegen eines bestimmten druckabhängigen Signals (28) einer Fehlfunktion, insbesondere einem Nicht-Schalten des Ventils (12) zugeordnet wird.

3. Verfahren nach Anspruch 1 oder 2, **dadurch gekennzeichnet, dass** aus der Zeit zwischen dem Startzeitpunkt t₀ und dem Vorliegen eines bestimmten druckabhängigen Signals (28) eine Ist-Schaltzeit des Ventils (12) bestimmt wird, die mit einer vorgegebenen Soll-Schaltzeit verglichen wird, wobei der Fall, das die Ist-Schaltzeit kleiner oder gleich der Soll-Schaltzeit ist, einem korrekten Schaltvorgang des Ventils (12) zugeordnet wird.

4. Verfahren nach Anspruch 3, **dadurch gekennzeichnet, dass** die Ist-Schaltzeit mehrmals hintereinander bestimmt wird, um zu überprüfen ob sich diese verändert.

5. Verfahren nach einem der vorhergehenden Ansprüche, **dadurch gekennzeichnet, dass** zunächst bei konstantem Betriebszustand des elektrischen Betätigungsglieds (14) ein druckabhängiges Referenzsignal, beispielsweise ein Grundrauschen, ermittelt und ein ermitteltes, bestimmtes druckabhängiges Signal (28) mit dem Referenzsignal verglichen wird.

6. Verfahren nach einem der vorhergehenden Ansprüche, **dadurch gekennzeichnet, dass** es sich bei der Betriebszustandsanzeige (16) um eine Leuchtanzeige handelt, die vorzugsweise mittels Aufleuchten einen Funktionszustand und im-dunklen Zustand einen Ruhezustand des Betätigungsglieds (14) anzeigt.

7. Verfahren nach Anspruch 6, **dadurch gekennzeichnet, dass** es sich bei der Leuchtanzeige um wenigstens ein Leuchtmittel, insbesondere um wenigstens eine LED handelt.

8. Verfahren nach einem der vorhergehenden Ansprüche, **dadurch gekennzeichnet, dass** es sich bei dem optischen Sensor (17) um ein optisch empfindliches Halbleiterelement handelt, vorzugsweise mit einer Empfindlichkeit im sichtbaren Bereich.

9. Verfahren nach Anspruch 8, **dadurch gekennzeichnet, dass** es sich bei dem Halbleiterelement um eine Fotodiode und/oder um einen Fototransistor handelt.

10. Verfahren nach einem der vorhergehenden Ansprüche, **dadurch gekennzeichnet, dass** die Erfassungseinrichtung (20) an der Ventilperipherie des zu untersuchenden Ventils (12) lösbar befestigt werden kann, insbesondere an einem mit dem betreffenden Ventilausgang verbundenen Druckschlauch (40).

11. Verfahren nach einem der vorhergehenden Ansprüche, **dadurch gekennzeichnet, dass** es sich bei dem druckabhängigen Signal (28) um ein Beschleunigungssignal handelt, das mittels eines der Erfassungseinrichtung (20) zugeordneten Beschleunigungssensors (23) ermittelt wird.

12. Vorrichtung zur Funktionsüberwachung bei der Fluidsteuerung dienenden Ventilen (12), die wenigstens ein elektrisches Betätigungsglied (14) zur Ventilbetätigung aufweisen, wobei die Vorrichtung eine Betriebszustandsanzeige (16) aufweist, die zur Anzeige des aktuellen Betriebszustands des Betätigungsglieds (14) mit dem Betätigungsglied gekoppelt ist, **dadurch gekennzeichnet, dass** die Vorrichtung ein optischer Sensor (17) zur optischen Erfassung einer Änderung des angezeigten Betriebszustands des Betätigungsglieds (14) aufweist, der mit einer Signalverarbeitungseinrichtung (18) der Vorrichtung zur Verarbeitung des vom optischen Sensor übermittelten Signals und zur Festlegung der Betriebszustandsänderung als Startzeitpunkt t₀ gekoppelt ist, wobei die Vorrichtung eine Erfassungseinrichtung (20) zur Messung einer Druckänderung am Ventilausgang infolge der Betriebszustandsänderung ab dem Startzeitpunkt t₀ und zur Erzeugung eines der Druckänderung zugeordneten druckabhängigen Signals (28) sowie der Übermittlung dieses Signals an die Signalverarbeitungseinrichtung (18), aufweist, wobei die Signalverarbeitungseinrichtung (18) eine Analyseeinheit (19) aufweist, um den Schaltzustand des Ventils (12) zu verifizieren, derart, dass prüfbar ist, ob ein bestimmtes druckabhängiges Signal (28) ab dem Startzeitpunkt t₀ vorliegt.

13. Vorrichtung nach Anspruch 12, **dadurch gekennzeichnet, dass** als Betriebszustandsanzeige (16) eine Leuchtanzeige vorgesehen ist, die vorzugsweise mittels Aufleuchten einen Funktionszustand und im dunklen Zustand einen Ruhezustand des Betätigungsglieds (14) anzeigt.

14. Vorrichtung nach Anspruch 13, **dadurch gekennzeichnet, dass** als Leuchtanzeige wenigstens ein Leuchtmittel, insbesondere wenigstens eine LED, vorgesehen ist.

15. Vorrichtung nach einem der Ansprüche 12 bis 14, **dadurch gekennzeichnet, dass** als optischer Sensor (17) ein optisch empfindliches Halbleiterelement vorgesehen ist, vorzugsweise mit einer Empfindlichkeit im sichtbaren Bereich.

16. Vorrichtung nach Anspruch 15, **dadurch gekennzeichnet, dass** als Halbleiterelement eine Fotodiode und/oder ein Fototransistor vorgesehen ist.

17. Vorrichtung nach einem der Ansprüche 12 bis 16, **dadurch gekennzeichnet, dass** die Erfassungseinrichtung (20) an der Ventilperipherie des zu untersuchenden Ventils (12) lösbar befestigbar ist, insbesondere an einem mit dem Ventilausgang verbundenen Druckschlauch (40).

18. Vorrichtung nach einem der Ansprüche 12 bis 17, **dadurch gekennzeichnet, dass** die Erfassungseinrichtung (20) wenigstens einen Beschleunigungssensor (23) zur Ermittlung eines druckabhängigen Signals (28) in Form eines Beschleunigungssignals aufweist.

19. Vorrichtung nach Anspruch 18, **dadurch gekennzeichnet, dass** die Erfassungseinrichtung (20) eine Befestigungsklemme (21) besitzt, in die der Beschleunigungssensor (23) integriert ist.

20. Vorrichtung nach einem der Ansprüche 12 bis 17, **dadurch gekennzeichnet, dass** die Erfassungseinrichtung (20) wenigstens einen Drucksensor zur Ermittlung eines druckabhängigen Signals aufweist.

21. Vorrichtung nach einem der Ansprüche 12 bis 20, **dadurch gekennzeichnet, dass** als Signalverarbeitungseinrichtung (18) ein Rechner mit einem Mikro-Controller vorgesehen ist.

22. Vorrichtung nach einem der Ansprüche 12 bis 21, **dadurch gekennzeichnet, dass** als elektrisches Betätigungsglied (14) ein Elektromagnet mit wenigstens einer Magnetspule vorgesehen ist.

23. Vorrichtung nach einem der Ansprüche 12 bis 22, geeignet zur Durchführung des Verfahrens nach einem der Ansprüche 1 bis 11.

## Claims

1. Method for monitoring the function of valves (12) used for fluid control, which comprise at least one electric actuating element (14) for valve actuation, said method being coupled to an operating state indicator (16) for the indication of the current operating state of the actuating element (14) and comprising the following steps:
- optical detection of a change in the indicated operating state by means of an optical sensor (17),
- definition of the change in operating state as starting time t₀,
- measurement of a pressure change at the valve outlet resulting from the change in operating state by means of a detection device (20) from the starting time to and generation of a pressure-dependent signal (28) assigned to the pressure change, and
- verification of the switching state of the valve by checking for the presence of a defined pressure-dependent signal (28) at a defined time from the starting time to.

2. Method according to claim 1, **characterised in that** a presence of a defined pressure-dependent signal (28) is assigned to a switching action of the valve (10) and an absence of a defined pressure-dependent signal (28) is assigned to a malfunction, in particular to a lack of a switching action, of the valve (12).

3. Method according to claim 1 or 2, **characterised in that** an actual switching time of the valve, which is compared to a predetermined set switching time, is determined from the time elapsed between the starting time to and the presence of a defined pressure-dependent signal (28), the case in which the actual switching time is shorter than or equal to the set switching time being assigned to the correct switching action of the valve (12).

4. Method according to claim 3, **characterised in that** the actual switching time is determined several times in succession in order to check whether it changes.

5. Method according to any of the preceding claims, **characterised in that**, in a constant operating state of the electric actuating element (14), a pressure-dependent reference signal, for example a background noise, is first determined and a detected defined pressure-dependent signal (28) is compared to the reference signal.

6. Method according to any of the preceding claims, **characterised in that** the operating state indicator (16) is an illuminated display which preferably indicates an operative state of the actuating element (14) by illuminating and a non-operative state by extinguishing.

7. Method according to claim 6, **characterised in that** the illuminated display comprises at least one light-emitting means, in particular an LED.

8. Method according to any of the preceding claims, **characterised in that** the optical sensor (17) is an optically sensitive semiconductor element, preferably with a sensitivity in the visible range.

9. Method according to claim 8, **characterised in that** the semiconductor element is a photo diode and/or a photo transistor.

10. Method according to any of the preceding claims, **characterised in that** the detection device (20) can be releasably secured to the periphery of the valve (12) to be checked, in particular to a pressure hose (40) connected to the relevant valve outlet.

11. Method according to any of the preceding claims, **characterised in that** the pressure-dependent signal (28) is an acceleration signal detected by means of an acceleration sensor (23) assigned to the detection device (20).

12. Device for monitoring the function of valves (12) used for fluid control, which comprise at least one electric actuating element (14) for valve actuation, said device comprising an operating state indicator (16) coupled to the actuating element for the indication of the current operating state of the actuating element (14), **characterised in that** the device comprises an optical sensor (17) for the optical detection of a change in the indicated operating state of the actuating element (14), which is coupled to a signal processing device (18) of the device for processing the signals transmitted by the optical sensor and for defining the change in operating state as starting time t₀,
wherein the device comprises a detection device (20) for measuring a pressure change at the valve outlet resulting from the change in operating state from the starting time t₀, for generating a pressure-dependent signal (28) assigned to the pressure change and for transmitting this signal to the signal processing device (18), wherein the signal processing device (18) comprises an analysis unit (19) for verifying the switching state of the valve such that the presence of a defined pressure-dependent signal (28) from the starting time to can be checked.

13. Device according to claim 12, **characterised in that** an illuminated display which preferably indicates an operative state of the actuating element (14) by illuminating and a non-operative state by extinguishing is provided as an operating state indicator (16).

14. Device according to claim 13, **characterised in that** at least one light-emitting means, in particular an LED, is provided as an illuminated display.

15. Device according to any of claims 12 to 14, **characterised in that** an optically sensitive semiconductor element, preferably with a sensitivity in the visible range, is provided as an optical sensor (17).

16. Device according to claim 15, **characterised in that** a photo diode and/or a photo transistor are/is provided as a semiconductor element.

17. Device according to any of claims 12 to 16, **characterised in that** the detection device (20) can be releasably secured to the periphery of the valve (12) to be checked, in particular to a pressure hose (40) connected to the valve outlet.

18. Device according to any of claims 12 to 17, **characterised in that** the detection device (20) comprises at least one acceleration sensor (23) for detecting a pressure-dependent signal (28) in the form of an acceleration signal.

19. Device according to claim 18, **characterised in that** the detection device (20) comprises a fixing clamp (21) integrated into the acceleration sensor (23).

20. Device according to any of claims 12 to 17, **characterised in that** the detection device (20) comprises at least one pressure sensor for the detection of the pressure-dependent signal.

21. Device according to any of claims 12 to 20, **characterised in that** a computer with a micro-controller is provided as a signal processing device (18).

22. Device according to any of claims 12 to 21, **characterised in that** a solenoid with at least one coil is provided as an electric actuating element (14).

23. Device according to any of claims 12 to 22, suitable for the method according to any of claims 1 to 11.

## Revendications

1. Procédé pour surveiller le fonctionnement de soupapes (12) servant à la commande d'un fluide, qui présentent au moins un organe de manoeuvre électrique (14) pour l'actionnement de la soupape, qui est couplé à un affichage d'état de service (16) destiné à afficher l'état de service actuel de l'organe de manoeuvre (14), le procédé comprenant les étapes suivantes :
- détection optique d'une variation de l'état de service affiché au moyen d'un capteur optique (17),
- détermination de la modification de l'état de service comme point initial du temps t₀,
- mesure d'une variation de pression à la sortie de la soupape en conséquence de la modification de l'état de service, au moyen d'un dispositif de détection (20) à partir du point initial du temps tₒ et production d'un signal (28) fonction de la pression et associé à la variation de pression, et
- vérification de l'état de commutation de la soupape en vérifiant si, après un certain temps à partir du point initial du temps t₀, un certain signal (28) fonction de la pression est présent.

2. Procédé selon la revendication 1, **caractérisé en ce que** la présence d'un certain signal (28) fonction de la pression est associée à une opération de commutation de la soupape (12) et l'absence d'un certain signal (28) fonction de la pression est associée à un dysfonctionnement, en particulier à une non-commutation de la soupape (12).

3. Procédé selon la revendication 1 ou 2, **caractérisé en ce qu'**à partir du temps entre le point initial du temps tₒ et la présence d'un certain signal (28) fonction de la pression, on détermine un temps de commutation réel de la soupape (12) que l'on compare à un temps de commutation de consigne prédéterminé, le cas dans lequel le temps de commutation réel est inférieur ou égal au temps de commutation de consigne étant associé à une opération de commutation correcte de la vanne (12).

4. Procédé selon la revendication 3, **caractérisé en ce que** le temps de commutation réel est déterminé plusieurs fois à la suite, afin de regarder s'il varie.

5. Procédé selon l'une des revendications précédentes, **caractérisé en ce qu'**un signal de référence fonction de la pression, par exemple un bruit de fond, est d'abord déterminé pour un état de service constant de l'organe de manoeuvre électrique (14), puis un certain signal (28) fonction de la pression et relevé est comparé au signal de référence.

6. Procédé selon l'une des revendications précédentes, **caractérisé en ce que** l'affichage (16) de l'état de service est un affichage lumineux qui indique de préférence en s'allumant un état de fonctionnement et, quand il est éteint, un état de repos de l'organe de manoeuvre (14).

7. Procédé selon la revendication 6, **caractérisé en ce que** l'affichage lumineux est au moins un moyen lumineux, en particulier au moins une diode électroluminescente.

8. Procédé selon l'une des revendications précédentes, **caractérisé en ce que** le capteur optique (17) est un élément semi-conducteur sensible optiquement, de préférence doté d'une sensibilité dans le domaine visible.

9. Procédé selon la revendication 8, **caractérisé en ce que** l'élément semi-conducteur est une diode photoélectrique et/ou un transistor photoélectrique.

10. Procédé selon l'une des revendications précédentes, **caractérisé en ce que** le dispositif de détection (20) peut être fixé de manière amovible sur la périphérie de la soupape (12) devant être surveillée, en particulier sur un tuyau de pression (40) relié à la sortie de soupape concernée.

11. Procédé selon l'une des revendications précédentes, **caractérisé en ce que** le signal (28) fonction de la pression est un signal d'accélération, qui est déterminé au moyen d'un capteur d'accélération (23) associé au dispositif de détection (20).

12. Dispositif pour surveiller le fonctionnement de soupapes (12) servant à la commande d'un fluide, qui présentent au moins un organe de manoeuvre électrique (14) pour l'actionnement des soupapes, le dispositif présentant,un affichage (16) de l'état de service qui est couplé à l'organe de manoeuvre pour afficher l'état de service actuel de l'organe de manoeuvre (14), **caractérisé en ce que** le dispositif présente un capteur optique (17) pour déterminer optiquement une variation de l'état de service affiché de l'organe de manoeuvre (14), qui est couplé à un dispositif de traitement du signal (18) du dispositif pour traiter le signal transmis par le capteur optique et pour déterminer la variation de l'état de service comme point initial du temps t₀, le dispositif comprenant un dispositif de détection (20) pour mesurer une variation de pression à la sortie de la soupape par suite de la variation de l'état de service à partir du point initial du temps t₀ et pour produire un signal (28) fonction de la pression associé à la variation de pression, ainsi que pour transmettre ce signal au dispositif de traitement du signal (18), le dispositif de traitement du signal (18) présentant une unité d'analyse (19) afin de vérifier l'état de commutation de la soupape (12), de telle manière que l'on peut vérifier si un certain signal (28) fonction de la pression est présent à partir du point initial du temps t₀.

13. Dispositif selon la revendication 12, **caractérisé en ce que**, comme affichage de l'état de service (16), il est prévu un affichage lumineux qui affiche de préférence en s'allumant un état de fonctionnement et, quand il est éteint, un état de repos de l'organe de manoeuvre (14).

14. Dispositif selon la revendication 13, **caractérisé en ce qu'**il est prévu comme affichage lumineux au moins un moyen lumineux, en particulier au moins une diode électroluminescente.

15. Dispositif selon l'une des revendications 12 à 14, **caractérisé en ce qu'**il est prévu comme capteur optique (17) un élément semi-conducteur sensible optiquement, de préférence doté d'une sensibilité dans le domaine visible.

16. Dispositif selon la revendication 15, **caractérisé en ce que** comme élément semi-conducteur, il est prévu une diode photoélectrique et/ou un transistor photoélectrique.

17. Dispositif selon l'une des revendications 12 à 16, **caractérisé en ce que** le dispositif de détection (20) peut être fixé de manière amovible sur la périphérie de la soupape (12) devant être surveillée, en particulier sur un tuyau de pression (40) relié à la sortie de soupape concernée.

18. Dispositif selon l'une des revendications 12 à 17, **caractérisé en ce que** le dispositif de détection (20) comprend au moins un capteur d'accélération (23) pour déterminer un signal (28) fonction de la pression sous la forme d'un signal d'accélération.

19. Dispositif selon la revendication 18, **caractérisé en ce que** le dispositif de détection (20) possède une pince de fixation (21) à laquelle est intégré le capteur d'accélération (23).

20. Dispositif selon l'une des revendications 12 à 17, **caractérisé en ce que** le dispositif de détection (20) présente au moins un capteur de pression pour déterminer un signal fonction de la pression.

21. Dispositif selon l'une des revendications 12 à 20, **caractérisé en ce qu'**il est prévu comme dispositif de traitement du signal (18) un calculateur avec un micro-contrôleur.

22. Dispositif selon l'une des revendications 12 à 21, **caractérisé en ce qu'**il est prévu comme organe de manoeuvre électrique (14) un électroaimant avec au moins une bobine magnétique.

23. Dispositif selon l'une des revendications 12 à 22, convenant pour la conduite du procédé selon l'une des revendications 1 à 11.
